(19) Europäisches Patentamt
European Patent Office
Office européen des brevets

(11) **EP 1 329 604 A2**

(12) **EUROPEAN PATENT APPLICATION**

(43) Date of publication:
**23.07.2003 Bulletin 2003/30**

(51) Int Cl.7: **F01N 3/28**

(21) Application number: **03000597.9**

(22) Date of filing: **14.01.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **16.01.2002 JP 2002007367**

(71) Applicants:
• **Hitachi, Ltd.**
  **Chiyoda-ku, Tokyo 101-8010 (JP)**
• **Hitachi Car Engineering Co., Ltd.**
  **Hitachinaka-shi, Ibaraki 312-0062 (JP)**

(72) Inventors:
• **Hiratsuka, Toshifumi**
  **Ibaraki 312-0063 (JP)**

• **Kuroda, Osamu**
  **Hitachi-shi, Ibaraki 316-0011 (JP)**
• **Kitahara, Yuichi**
  **Ibaraki 312-0032 (JP)**
• **Inoue, Takeshi**
  **Hitachinaka-shi, Ibaraki 312-0011 (JP)**
• **Doi, Ryouta**
  **Naka-gun, Ibaraki 311-0107 (JP)**
• **Shinotsuka, Norihiro**
  **Hitachinaka-shi, Ibaraki 312-0063 (JP)**
• **Okude, Kojiro**
  **deceased (JP)**
• **Okude, Mariko**
  **Hitachi-shi, Ibaraki 319-1222 (JP)**

(74) Representative: **Beetz & Partner Patentanwälte**
  **Steinsdorfstrasse 10**
  **80538 München (DE)**

(54) **Exhaust gas purifying device for internal combustion engine**

(57) The present invention provides an exhaust gas purifying device which can sufficiently perform HC purification even if a lean NOx catalyst included in a metal substrate is used. The exhaust gas purifying device comprises, in an exhaust passage (2) in an internal combustion engine (1) along a flowing direction (9) of the exhaust gas, a lean NOx catalyst (3) including a catalyst layer (7) which purifies nitrogen oxide contained in the exhaust gas under a hyperoxia atmosphere and a metal honeycomb (5), the lean NOx catalyst having the catalyst layer (7) supported within the metal honeycomb (5); and a reaction catalyst (4) for subjecting to an oxidation reaction at least hydrocarbon contained in the exhaust gas.

FIG.1

**Description**

Background of the Invention

The present invention relates to an exhaust gas purifying device for internal combustion engines capable of effectively purifying carbon monoxide (CO), hydrocarbon (HC), and nitrogen oxide (NOx), which are contained in exhaust gas discharged from an internal combustion engine of a vehicle and so forth, even in a hyperoxia atmosphere occurring in a lean-burn operation or the like.

Recently, for the purposes of saving resource and reducing $CO_2$ output, gasoline engine vehicles, DI (Direct-Injection) gasoline engine vehicles, diesel engine vehicles, and so forth which are capable of the lean-burn operation have gained attention as low fuel consumption vehicles. Since the lean-burn vehicles are operated in a state where a proportion of the air is larger than that of the fuel (lean air/fuel ratio) in the engine, the exhaust gas of the lean-burn vehicles contains an excessive amount of oxide.

Since a three-way catalyst, which is typically used in exhaust gas purification in the gasoline engines for vehicles, is designed to perform oxidation and reduction under an ideal air/fuel ratio, it has a problem in practical applications that it cannot sufficiently purify NOx although it purifies HC and CO; NOx, HC, and CO are contained in the exhaust gas from the lean-burn gasoline engine, the lean-burn DI gasoline engine, and the lean-burn diesel engine.

Therefore, developments of a catalyst (lean NOx catalyst) for purifying NOx contained in the exhaust gas containing the excessive oxygen have been made, and a catalyst which purifies NOx caught by a trapping material by way of reduction has been put to practical use.

In general, catalysts used to purify vehicle exhaust gas such as the three-way catalyst and the lean NOx catalyst have a honeycomb-like substrate of a monolith structure, wherein a support layer is formed on each of inner surfaces of cells of the substrate and a catalyst active ingredient is dispersed inside each of the support layers. The catalyst active ingredient is a component which is involved in the exhaust gas purification reaction.

The support is used for dispersion and retention of the catalyst active ingredient. Various metal oxides and composite oxides are usable as the support, and alumina or a material containing alumina as a main component is most commonly used as the support. In turn, as the material having the monolith structure, cordierite is most commonly used because it is excellent in heat resistance and cost saving.

One of the important characteristics of the catalysts to be used for vehicles is the heat resistance.

There is known the lean NOx catalyst composed of a NOx trap component and a component for performing oxidation and reduction of NOx as well as oxidation of HC and CO. The NOx trap component contains an alkali metal such as Na and K as well as an alkaline earth metal such as Sr and Ba as main components. The latter component contains a noble metal such as Pt, Rh, and Pd as main component.

In the lean NOx catalysts having the above structure, the NOx trap component moves in the catalyst layers by the thermal motion to reach the cordierite substrate, thereby bonding with a cordierite component. As a result, the decrease in the NOx trap component included in the catalyst layer of the lean NOx catalyst leads to deteriorations in the NOx trap ability and the strength of the cordierite substrate.

Further, the lean NOx catalyst of the NOx trap type has a problem that the NOx trap component decreases an exposed area of the noble metal to deteriorate functions to be provided by the noble metal, particularly, the ability of burning HC and CO. These tendencies are prominent in catalysts containing the alkali metal such as Na and K as the NOx trap component.

In order to suppress the bonding of the cordierite component with the NOx trap component in the lean NOx catalyst, there has been proposed a method of providing a zeolite layer between the cordierite substrate and the catalyst layer to suppress the migration of an absorbent to the cordierite component. The method is disclosed in Japanese Patent Laid-open No. 2000-129402, for example.

However, the provision of the zeolite layer between the cordierite substrate and the catalyst layer complicates the manufacturing process to inevitably raise the manufacturing cost. In order to solve the above problems, use of a metal substrate, i.e. a metal honeycomb, has been studied.

Summary of the Invention

A metal honeycomb is a monolith substrate formed from a metal material. Known metal honeycomb is manufactured as follows; metal foils, each of which consisting mainly of stainless steel, are molded and then integrally joined by welding or diffusion bonding. The name "metal honeycomb" is a common name of monolith base bodies and, therefore, those whose honeycomb channels (cells) are not in the form of a honeycomb are called metal honeycombs. Reactivity of the metal honeycomb material to alkali metal is apparently lower than that of the cordierite material, and the metal honeycomb achieves the heat resistance of about 900°C. Accordingly, the lean NOx catalyst having the metal honeycomb as its substrate enables the remarkable reduction of deterioration in strength of the substrate.

However, the lean NOx catalyst having the metal honeycomb as its substrate has the above-described problems of the decrease in exposed area of noble metal due to the alkaline component contained in the NOx trap component as well as the remarkable deterioration in HC-purification ability due to the alkali which does not migrate to the metal substrate.

The present invention has been accomplished in view of the above problems, and an object thereof is to provide an exhaust gas purifying device for internal combustion engines capable of sufficiently performing HC-purification even if a lean NOx catalyst having a metal substrate is used.

The present invention is characterized by an exhaust gas purifying device for an internal combustion engine used for purifying exhaust gas exhausted from the internal combustion engine through an exhaust passage, comprising: a lean NOx catalyst including a catalyst layer which purifies nitrogen oxide contained in the exhaust gas under a hyperoxia atmosphere and a metal honeycomb (metal substrate), the lean NOx catalyst having the catalyst layer supported within the metal honeycomb; and a reaction catalyst (oxidation catalyst) for subjecting to an oxidation reaction at least hydrocarbon contained in the exhaust gas; the lean NOx catalyst and the reaction catalyst being disposed in the exhaust passage along a flowing direction of the exhaust gas.

The reaction catalyst (oxidation catalyst) is disposed upstream or downstream of the lean NOx catalyst.

Since the lean NOx catalyst having the catalyst layers supported within the metal honeycomb (metal substrate) and the reaction catalyst (oxidation catalyst) are disposed in the exhaust passage of the internal combustion engine according to the present invention, the exhaust gas purifying device of the present invention sufficiently purifies hydrocarbon (HC) without deterioration in NOx trap ability and prevents a deterioration in function which is otherwise caused by a decrease in exposed area of noble metal due to alkali.

Brief Description of the Drawings

Other objects and advantages of the invention will become apparent from the following description of embodiments with reference to the accompanying drawings in which:

Fig. 1 is a constitutional view showing one embodiment of the present invention;
Fig. 2 is an enlarged view showing a portion of a lean NOx catalyst supported within a metal honeycomb;
Fig. 3 is an enlarged view showing a portion of a reaction catalyst;
Fig. 4 is a constitutional view showing another embodiment of the present invention;
Fig. 5 is a table of assistance in explaining effects of the present invention;
Fig. 6 is a constitutional view showing another embodiment of the present invention;
Fig. 7 is a table of assistance in explaining effects of the present invention;
Fig. 8 is a constitutional view showing another embodiment of the present invention;
Fig. 9 is a constitutional view showing another embodiment of the present invention;
Fig. 10 is a constitutional view showing another embodiment of the present invention;
Fig. 11 is a graph for illustrating characteristics of the present invention; and
Fig. 12 is a graph for illustrating characteristics of the present invention.

Description of the Preferred Embodiments

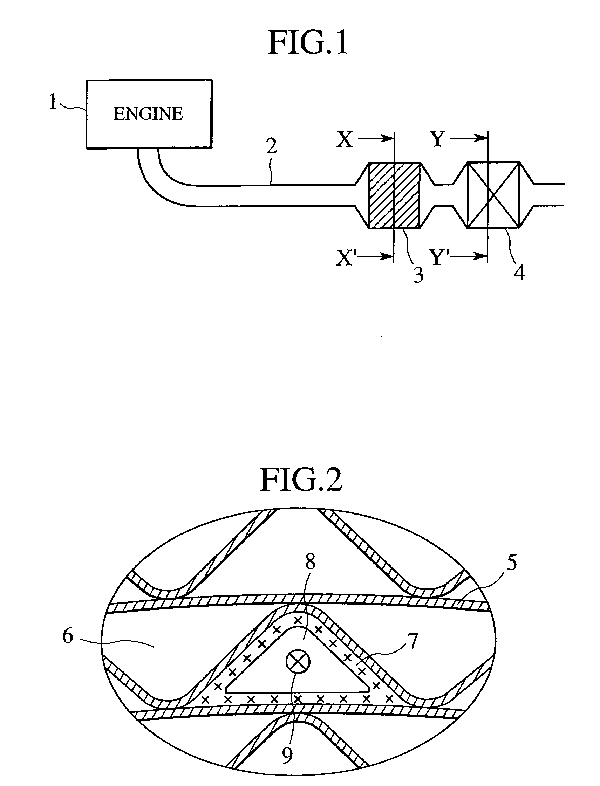

One embodiment of the present invention is illustrated in Fig. 1. Referring to Fig. 1, exhaust gas exhausted from an engine 1 is discharged through an exhaust passage 2. A lean NOx catalyst 3, which is a metal honeycomb supporting a NOx trap catalyst, is disposed upstream of the exhaust passage 2, and a reaction catalyst 4 is disposed downstream thereof. A structure of each of the catalysts 3 and 4 is such that a cylindrical substrate (honeycomb) is provided with many cells perforated to be in the form of a mesh and a catalyst layer is dispersed by baking on an inner surface of each of the cells.

An enlarged view of partial X-X' section of the lean NOx catalyst 3 is shown in Fig. 2. Many cells 6 are perforated on the metal honeycomb (metal substrate) 5, and the catalyst layer 7 for absorbing NOx is formed on the inner surface of each of the cells 6. A hole 8 which is defined by the catalyst layer 7 serves as a passage for the exhaust gas. Indicated by the reference numeral 9 is a flowing direction of the exhaust gas, which is perpendicular to the drawing sheet.

The structure of the lean NOx catalyst 3 is as described below, for example.

Specifically, a composition comprising a specific metal and metal oxide (or composite oxide) is supported within a metal substrate. Alternatively, another composition, which is obtained by letting the porous heat resistant metal oxide such as alumina carry the former composition, is supported within a metal substrate. In these cases, the above-described metal and metal oxide (or composite oxide) each contain the following: at least one alkali metal selected from the group consisting of lithium (Li), potassium (K), sodium (N), etc.; at least one selected from the group consisting of alkaline earth metals such as magnesium (Mg), calcium (Ca), strontium (Sr), and barium (Ba), metals of IVa group of the Periodic System of Elements such as rare earths including cerium, etc., titanium (Ti), and zirconium (Zr), metals of Va group such as vanadium (V) and niobium (Nb), metals of VIa group such as molybdenum (Mo) and tungsten (W), metals of VIIa group such as manganese (Mn), metals of the iron group such as iron (Fe), cobalt (Co), and nickel (Ni), metals of IIIb group of the Periodic System such as copper (Cu), zinc (Zn), aluminum (Al), and gallium (Ga), metals of IVb group such as silicon (Si) and stannum (Sn); and at least one noble metal selected from the group consisting of platinum (Pt), rhodium (Rh), palladium (Pd), ruthenium (Ru), and iridium (Ir).

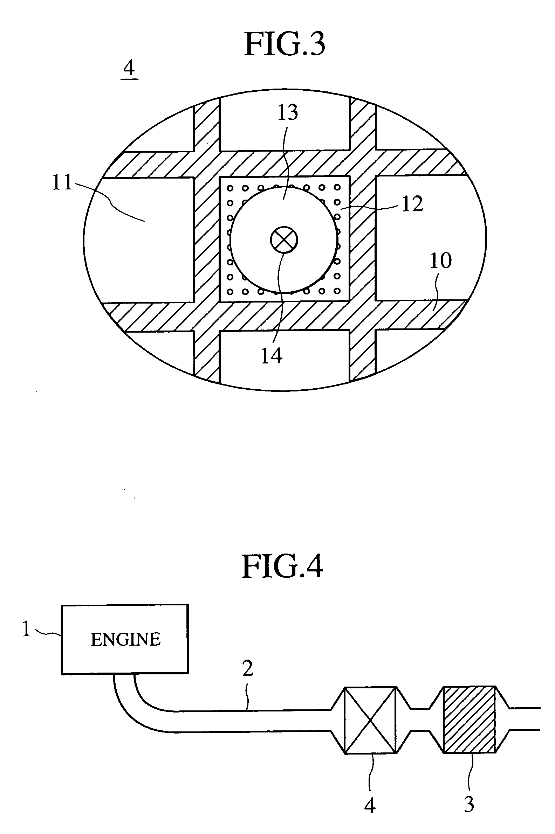

Fig. 3 is an enlarged view partially showing Y-Y' section of the reaction catalyst 4. A cordierite honeycomb 10 is provided with many square cells 11 which are formed by perforation, and a catalyst layer 12 for HC oxidation reaction is formed on an inner surface of each of the cells 11. A hole 13 which is defined by the catalyst layer 12 serves as a passage for the exhaust gas. Indicated by the reference numeral 14 is a flowing direction of the exhaust gas, which is perpendicular to the drawing sheet.

The present invention having the above-described structure will hereinafter be described using specific examples and comparisons between the specific examples and comparable examples.

Test Catalysts

Each of catalysts in Examples and Comparative Examples which were used in tests had a honeycomb capacity of 0.7 L, which is the capacity in an actual vehicle, in order to conduct the tests using the vehicle. For the purpose of clarifying differences between Examples of the present invention and Comparative Examples, components and amounts of the components (composition) of each of the lean NOx catalyst 3 and the reaction catalyst 4 of the present invention were set to be identical with those of a pair of relevant one of Comparative Example catalysts.

Note that DPF (Diesel Particulate Filter) of 0.5 L-honeycomb capacity was used for the tests.

NOx Trap Catalyst A (Catalyst 3)

Alumina powders and acidic alumina nitrate as a binder were mixed to prepare slurry, and a metal honeycomb, which had been coated with alumina of 190 g per litter of apparent volume of the honeycomb beforehand, was coated with the slurry to be dried and baked, thereby obtaining an alumina-coated honeycomb.

The honeycomb was immersed in a Ce nitrate solution, and then dried at about 100°C, followed by baking at about 600°C for an hour. After that, the honeycomb was immersed in a solution containing Na nitrate, Mg nitrate, titaniasol, and dinitrodiammine Pt solution, and then dried at 100°C, followed by baking at about 600°C for an hour. Composition (on metal conversion) of the NOx trap catalyst A per litter of honeycomb apparent volume was Ce: 27 g, Na: 18 g, Mg: 1.8 g, Ti: 4 g, and Pt: 0.8 g.

Reaction Catalyst B (Catalyst 4)

Alumina slurry prepared in the same manner as in the preparation of the NOx trap catalyst A was coated on a cordierite honeycomb which had been coated with alumina of 190 g per litter of honeycomb apparent volume beforehand, and then the cordierite honeycomb was dried and baked to obtain an alumina-coated honeycomb.

The honeycomb was immersed in a Ce nitrate solution to be dried at about 100°C, and then baked at about 600°C for an hour. After that, the honeycomb was immersed in a solution containing dinitrodiammine Pt solution and Rh nitrate, and then dried at about 100°C, followed by baking at about 600°C for an hour. Composition (on metal conversion) of the reaction catalyst B per litter of honeycomb apparent volume was Ce: 27 g, Pt: 2.0 g, and Rh: 0.2.

Comparative Catalyst C

Alumina slurry prepared in the same manner as in the preparation of the NOx trap catalyst A was coated on a cordierite honeycomb which had been coated with alumina of 190 g per litter of honeycomb apparent volume beforehand, and then the cordierite honeycomb was dried and baked to obtain an alumina-coated honeycomb.

The honeycomb was immersed in a Ce nitrate solution to be dried at about 100°C, and then baked at about 600°C for an hour. After that, the honeycomb was immersed in a solution containing Na nitrate, Mg nitrate, titaniasol, dinitrodiammine Pt solution, and Rh nitrate, and then dried at about 100°C, followed by baking at about 600°C for an hour. Composition (on metal conversion) of the comparative catalyst C per litter of honeycomb apparent volume was Ce: 13.5 g, Na: 9 g, Mg: 0.9 g, Ti: 2 g, Pt: 1.4 g, and Rh: 0.1 g.

NOx Trap Catalyst D (another example of the catalyst 3)

NOx trap catalyst D was prepared in the same manner as in the preparation of the NOx trap catalyst A except for using a metal honeycomb with DPF, in place of the metal honeycomb.

Pre-Catalyst

Alumina slurry prepared in the same manner as in the preparation of the NOx trap catalyst A was coated on a 0.5 L-cordierite honeycomb which had been coated with alumina of 100 g per litter of honeycomb apparent volume beforehand to obtain an alumina-coated honeycomb.

The honeycomb was immersed in a Ce nitrate solution to be dried at about 100°C, and then baked at about 600°C for an hour. After that, the honeycomb was immersed in a solution containing dinitrodiammine Pt solution, dinitrodiammine Pd solution, and Rh nitrate, and then dried at about 100°C, followed by baking at about 600°C for an hour. Composition (on metal conversion) of the pre-catalyst per litter of honeycomb apparent volume was Ce: 27 g, Pt: 1.5 g, and Rh: 0.15 g, and Pd: 5 g.

DPF (Diesel Particulate Filter)

A monolith honeycomb type filter prepared by alternately sealing inlets and outlets of cells of porous cordierite honeycomb (200 cells/in$^2$) was used for the DPF.

Hereinafter, for Comparative Example 1, which is compared with of the embodiment shown in Fig. 1, test results of an exhaust gas purifying device in which a pair of comparative example catalysts C is disposed in an exhaust passage 2 along a flowing direction of exhaust gas, will be described. Honeycomb capacity and composition of each of the comparative catalysts C was adjusted to be identical with those of relevant one of the NOx trap catalyst A and the reaction catalyst B.

Test Example 1

The embodiment shown in Fig. 1 (Example 1) and Comparative Example 1 were evaluated by mounting each of them on a vehicle to confirm effects of the combination of the NOx trap catalyst 3 supported within the metal honeycomb and the reaction catalyst 4.

The catalysts were subjected to a process for imparting heat resistance thereto by retaining them in a furnace with an air atmosphere at 830°C for 60 hours. The catalysts were fixed in a container made from stainless steel, and the container was mounted on an exhaust passage of a 1,000 cc-gasoline engine lean-burn test vehicle.

The test was conducted in such a manner that the test vehicle was fixed on a chassis dynamometer to travel at constant speeds of 40 km/h (temperature of exhaust gas at upstream catalyst inlet of 300°C) and 70 km/h (temperature of exhaust gas at upstream catalyst inlet of 400°C). The operation state of the vehicle was switched between a lean burn operation (A/F = 20) and a rich operation to measure a NOx concentration and a HC concentration in exhaust gas during traveling. Rates of purification of NOx and HC were calculated from gas concentrations at the inlet of the most upstream catalyst (lean NOx catalyst) 3 and the outlet of the most downstream catalyst (reaction catalyst) 4 of a minute after the switching from the rich operation to the lean burn operation using the following equation to confirm purification abilities of Example 1.

$$\text{Purification rate (\%)} = \{(\text{concentration of exhaust gas at catalyst inlet - concentration of exhaust gas at catalyst outlet})/\text{concentration of exhaust gas at catalyst inlet}\} \times 100$$

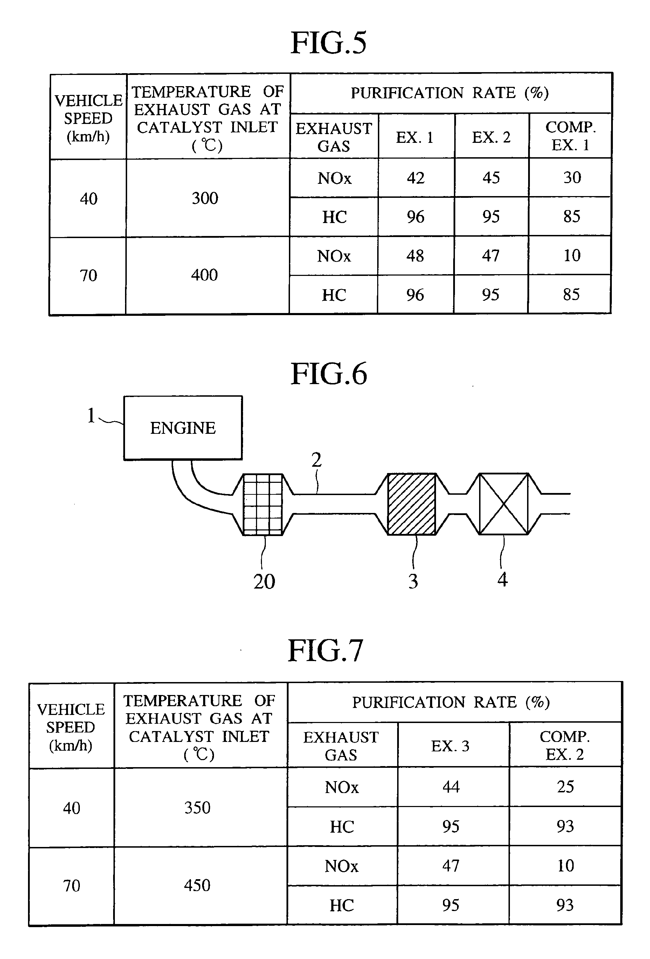

The purification rates of NOx and HC are as shown in Fig. 5. As is apparent from Fig. 5, the purification abilities of Example 1 with respect to NOx and HC are superior to those of Comparative Example 1 at each of the vehicle speeds of 40 km/h and 70 km/h.

In Example 2 shown in Fig. 5, the reaction catalyst 4 was disposed upstream of the lean NOx catalyst 3 as shown in Fig. 4. Purification abilities of Example 2 are also superior to those of Comparative Example 1.

Another embodiment of the present invention is shown in Fig. 6. In Example 3 shown in Fig. 6, a pre-catalyst (three-way catalyst) 20 was disposed upstream of the exhaust passage 2 of the lean NOx catalyst 3 (NOx trap catalyst A) used in Example 1.

In an exhaust gas purifying device of Comparative Example 2, which is compared with that of Example 3, the same pre-catalyst (three-way catalyst) 20 as that shown in Fig. 6 was disposed upstream of the pair of comparative catalysts C of Comparative Example 1.

Test Example 2

The embodiment shown in Fig. 6 (Example 3) and Comparative Example 2 were evaluated by mounting each of them on a vehicle with the pre-catalysts 20 being disposed on the most upstream portion in an exhaust passage 2 of each of the vehicles to confirm effects of the combination of the NOx trap catalyst 3 and the reaction catalyst 4. A process for imparting heat resistance to the catalysts was performed in the same manner as in Text Example 1. The test was conducted by using Example 3 and Comparative Example 2 and in the same manner as in Test Example 1.

Temperatures of exhaust gas at an inlet of the NOx trap catalyst 3 at the speeds 40 km/h and 70 km/h in Test Example 2 were 350°C and 450°C, respectively.

Rates of purifying NOx and HC of Example 3 shown in Fig. 6 and Comparative Example 2 are as shown in Fig. 7. As is apparent from Fig. 7, purification abilities of Example 3 at 40 km/h and 70 km/h are superior to those of

Comparative Example 2

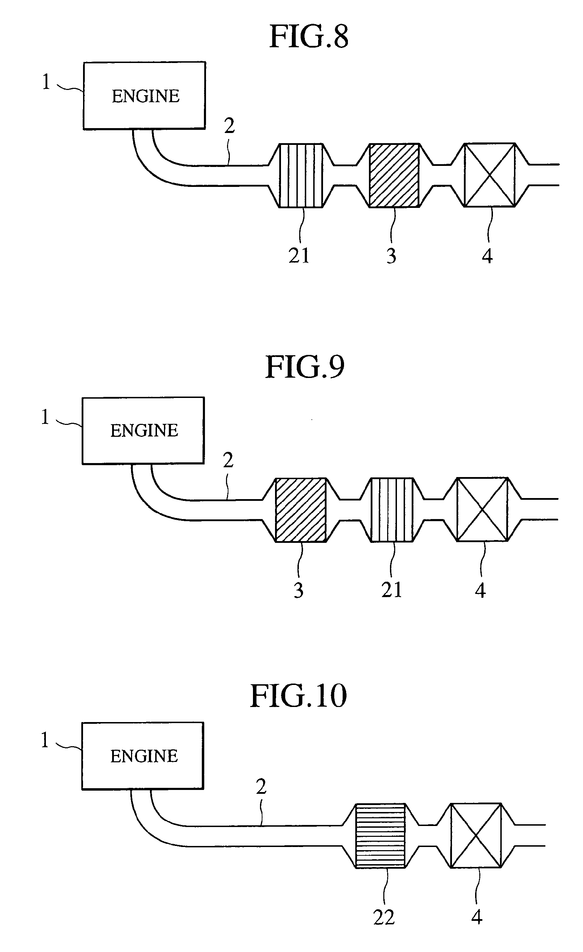

Another embodiment of the present invention is shown in Fig. 8. Shown in Fig. 4 is Example 4 wherein the DPF 21 described above is disposed upstream of the lean NOx catalyst 3 (NOx trap catalyst A) of Example 1 in an exhaust passage 2.

Examples of the DPF 21 to be used include a monolith honeycomb type filter fabricated by alternately sealing inlets and outlets of cells of a porous cordierite honeycomb, a ceramics fiber layered type fabricated by winding a ceramics fiber around a porous tube, a filter formed on a metal wire mesh hollow cylinder, sintered metal panel-layered body, and so forth.

The DPF 21 is used primarily to eliminate carbon particles (soot) in the combustion exhaust gas from the internal combustion engine, and other filters, which are not necessarily the diesel particulate type, may be used as the DPF 21 so far as they can eliminate the soot in the exhaust gas.

Example 4 shown in Fig. 8 achieved good purification rates of NOx and HC and improvements in purification abilities similarly to those of Example 3 shown in Fig. 6.

It is apparent that effects similar to those achieved by Example 4 can be achieved by disposing the DPF 21 between the lean NOx catalyst 3 and the reaction catalyst 4 as shown in Fig. 9.

Further, similar effects can be achieved by using a lean NOx catalyst 22 with a DPF function as the lean NOx catalyst 3 as shown in Fig. 10 even if the DPF 21 is omitted. Examples of the lean NOx catalyst 22 with a DPF function to be used include a filter formed on a metal wire mesh hollow cylinder, sintered metal panel-layered body, and so forth.

Evaluations of Examples shown in Figs. 8 to 10 were conducted for a lean-burn operation with an A/F ratio of 40 by use of a 2,200 cc-diesel engine vehicle as a test vehicle. Examples of Figs. 8 to 10 were improved in abilities of purifying NOx and HC at both of 40 km/h and 70 km/h.

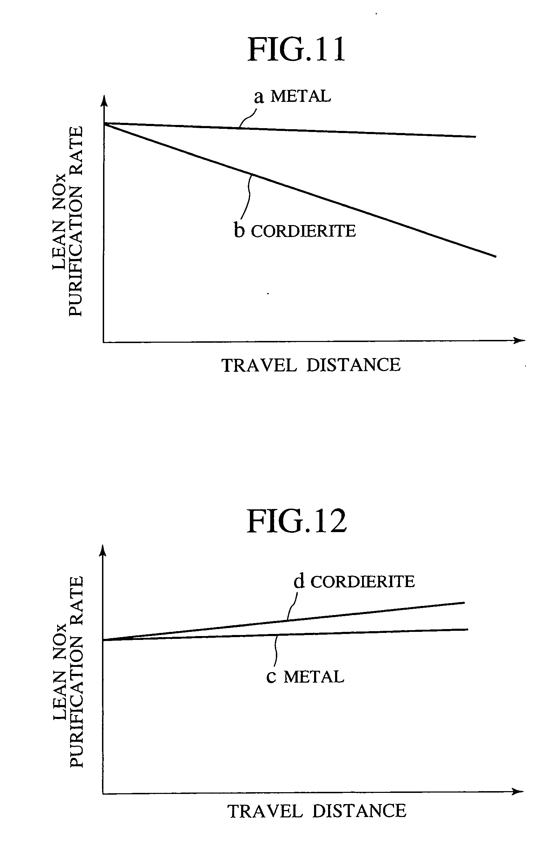

The exhaust gas discharged from the internal combustion engine is purified as described above owing to the lean NOx catalyst comprising the catalyst layers supported within the metal honeycomb (metal substrate) and the reaction catalyst (oxidation catalyst) which are disposed in the exhaust passage of the internal combustion engine. A characteristic curve a shown in Fig. 11, wherein a travel distance (i.e. heat history) is used to enter the horizontal axis, indicates the lean NOx purification rate of the lean NOx catalyst supported within the metal honeycomb. By contrast, the lean NOx purification rate of the lean NOx catalyst supported within the cordierite honeycomb decreases to a large extent in comparison with the metal honeycomb as the travel distance increases, i.e., as the heat history increases, as indicated by a characteristic curve b in Fig. 11.

In turn, the rate of purifying HC of the reaction catalyst supported within the cordierite honeycomb increases with the increase in travel distance as indicated by a characteristic curve d in Fig. 12, while that of the lean NOx catalyst supported within the metal honeycomb has a little increase as indicated by a characteristic curve c when compared with that of the cordierite honeycomb.

Therefore, by using the lean NOx catalyst supported within the metal honeycomb (metal substrate) and the reaction catalyst in combination, it is possible to sufficiently purify hydrocarbon (HC) without causing the decrease in NOx trap ability and prevent the deterioration in purification function which is otherwise caused by the decrease in exposed area of noble metal due to alkali.

While the invention has been described in its preferred embodiments, it is to be understood that the words which have been used are words of description rather than limitation and that changes within the purview of the appended claims may be made without departing from the true scope and spirit of the invention in its broader aspects.

**Claims**

1. An exhaust gas purifying device for an internal combustion engine used for purifying exhaust gas exhausted from the internal combustion engine (1) through an exhaust passage (2), comprising:

   a lean NOx catalyst (3) including a catalyst layer (7) which purifies nitrogen oxide contained in the exhaust gas under a hyperoxia atmosphere and a metal honeycomb (5), said lean NOx catalyst having the catalyst layer (7) supported within the metal honeycomb (5); and
   a reaction catalyst (4) for subjecting to an oxidation reaction at least hydrocarbon contained in the exhaust gas; said lean NOx catalyst (3) and said reaction catalyst (4) being disposed in the exhaust passage (2) along a flowing direction (9) of the exhaust gas.

2. An exhaust gas purifying device for an internal combustion engine used for purifying exhaust gas exhausted from the internal combustion engine (1) through an exhaust passage (2), comprising:

   a lean NOx catalyst (3) including a catalyst layer which purifies nitrogen oxide contained in the exhaust gas under a hyperoxia atmosphere and a metal honeycomb (5), said lean NOx catalyst (3) having the catalyst layer (7) supported within the metal honeycomb (5); and
   a reaction catalyst (4) for subjecting to an oxidation reaction hydrocarbon and carbon monoxide contained in the exhaust gas downstream of said lean NOx catalyst (3);
   said lean NOx catalyst (3) and said reaction catalyst (4) being disposed in the exhaust passage (2).

3. An exhaust gas purifying device for an internal combustion engine used for purifying exhaust gas exhausted from the internal combustion engine through an exhaust passage (2), comprising:

   a lean NOx catalyst (3) including a catalyst layer (7) which traps nitrogen oxide contained in the exhaust gas with a trapping material so that the trapped nitrogen oxide is purified by reduction and a metal honeycomb (5), said lean NOx catalyst (3) having the catalyst layer (7) supported within the metal honeycomb; and
   a reaction catalyst (4) including a catalyst layer (12) for subjecting to an oxidation reaction at least hydrocarbon contained in the exhaust gas and a cordierite substrate (10), said reaction catalyst (4) having the catalyst layer (12) supported within the cordierite substrate (10);
   said lean NOx catalyst (3) and said reaction catalyst (4) being disposed in the exhaust passage (2) along a flowing direction (9) of the exhaust gas.

4. An exhaust gas purifying device for an internal combustion engine used for purifying exhaust gas exhausted from the internal combustion engine (1) through an exhaust passage, comprising:

   a lean NOx catalyst (3) including a catalyst layer (7) which purifies nitrogen oxide contained in the exhaust gas under a hyperoxia atmosphere and a metal honeycomb (5), said lean NOx catalyst (3) having the catalyst layer (7) supported within the metal honeycomb (5); and
   a three-way catalyst (20) for purifying nitrogen oxide, hydrocarbon, and carbon monoxide contained in the exhaust gas;
   said lean NOx catalyst (3) and said three-way catalyst being disposed in the exhaust passage (2) along a flowing direction (9) of the exhaust gas.

5. An exhaust gas purifying device for an internal combustion engine used for purifying exhaust gas exhausted from the internal combustion engine (1) through an exhaust passage (2), comprising:

   a three-way catalyst (20);
   a lean NOx catalyst (3) including a catalyst layer (7) which purifies nitrogen oxide contained in the exhaust gas under a hyperoxia atmosphere and a metal honeycomb (5), said lean NOx catalyst having the catalyst layer (7) supported within the metal honeycomb (5); and
   a reaction catalyst (4) for subjecting to an oxidation reaction at least hydrocarbon contained in the exhaust gas;
   said three-way catalyst (20), said lean NOx catalyst (3), and said reaction catalyst (4) being disposed in the exhaust passage (2) along a flowing direction (9) of the exhaust gas.

6. An exhaust gas purifying device for an internal combustion engine used for purifying exhaust gas exhausted from the internal combustion engine (1) through an exhaust passage (2), comprising:

a filter (21) for eliminating carbon particles contained in the exhaust gas;
a lean NOx catalyst (3) including a catalyst layer (7) which purifies nitrogen oxide contained in the exhaust gas under a hyperoxia atmosphere and a metal substrate (5), said lean NOx catalyst (3) having the catalyst layer (7) supported within the metal substrate (5); and
a reaction catalyst (4) for subjecting to an oxidation reaction at least hydrocarbon contained in the exhaust gas;
said filter (21), said lean NOx catalyst (3), and said reaction catalyst (4) being disposed in the exhaust passage (2) along a flowing direction (9) of the exhaust gas.

7. An exhaust gas purifying device for an internal combustion engine used for purifying exhaust gas exhausted from the internal combustion engine (1) through an exhaust passage (2), comprising:

a lean NOx catalyst (3) including a catalyst layer (7) which purifies nitrogen oxide contained in the exhaust gas under a hyperoxia atmosphere and a metal honeycomb (5), said lean NOx catalyst (3) having the catalyst layer (7) supported within the metal honeycomb (5) to eliminate carbon particles contained in the exhaust gas; and
a reaction catalyst (4) for subjecting to an oxidation reaction at least hydrocarbon contained in the exhaust gas;
said lean NOx catalyst (3) and said reaction catalyst (4) being disposed in the exhaust passage (2) along a flowing direction (9) of the exhaust gas.

# FIG.1

# FIG.2

# FIG.3

# FIG.4

# FIG.5

| VEHICLE SPEED (km/h) | TEMPERATURE OF EXHAUST GAS AT CATALYST INLET (℃) | PURIFICATION RATE (%) | | | |
|---|---|---|---|---|---|
| | | EXHAUST GAS | EX. 1 | EX. 2 | COMP. EX. 1 |
| 40 | 300 | NOx | 42 | 45 | 30 |
| | | HC | 96 | 95 | 85 |
| 70 | 400 | NOx | 48 | 47 | 10 |
| | | HC | 96 | 95 | 85 |

# FIG.6

# FIG.7

| VEHICLE SPEED (km/h) | TEMPERATURE OF EXHAUST GAS AT CATALYST INLET (℃) | PURIFICATION RATE (%) | | |
|---|---|---|---|---|
| | | EXHAUST GAS | EX. 3 | COMP. EX. 2 |
| 40 | 350 | NOx | 44 | 25 |
| | | HC | 95 | 93 |
| 70 | 450 | NOx | 47 | 10 |
| | | HC | 95 | 93 |

# FIG.8

ENGINE

1

2

21    3    4

# FIG.9

ENGINE

1

2

3    21    4

# FIG.10

ENGINE

1

2

22    4

# FIG.11

a METAL

b CORDIERITE

LEAN NOx PURIFICATION RATE

TRAVEL DISTANCE

# FIG.12

d CORDIERITE

c METAL

LEAN NOx PURIFICATION RATE

TRAVEL DISTANCE